# EUROPÄISCHE PATENTSCHRIFT

(11) **EP 1 891 390 B1**
(45) Veröffentlichungstag und Bekanntmachung des Hinweises auf die Patenterteilung: **23.03.2016**
(21) Anmeldenummer: 06818859.8
(22) Anmeldetag: 28.11.2006
(51) Int. Cl.: F28D 7/16, F28F 27/02, F28F 9/26

(54) **VORRICHTUNG ZUR EINFLUSSNAHME AUF DIE STRÖMUNG IM BEREICH EINER ROHRTRÄGERPLATTE EINES ROHRBÜNDEL-WÄRMETAUSCHERS**
DEVICE FOR INFLUENCING THE FLOW IN THE REGION OF A TUBE SUPPORT PLATE OF A TUBULAR HEAT EXCHANGER
DISPOSITIF D'ACTION SUR L'ÉCOULEMENT DANS LA ZONE D'UNE PLAQUE PORTE-TUBES D'UN ÉCHANGEUR DE CHALEUR À FAISCEAU DE TUBES

(30) Priorität: 13.12.2005 DE 102005059463
(43) Veröffentlichungstag der Anmeldung: 27.02.2008
(73) Patentinhaber: GEA TDS GmbH, 31157 Sarstedt (DE)
(72) Erfinder: ZIMMERMANN, Dietrich, 48619 Heek-Nienborg (DE); SCHLAG, Brigitte, 48653 Coesfeld (DE); GÜNTHER, Marcus, 23879 Mölln (DE); BUSCH, Norbert, 46325 Borken (DE)
(74) Vertreter: Hauck Patentanwaltspartnerschaft mbB
(86) Internationale Anmeldenummer: PCT/EP2006/011373
(87) Internationale Veröffentlichungsnummer: WO 2007/068343

(56) Entgegenhaltungen:
- EP-A1- 0 356 648
- EP-A1- 0 357 907
- EP-A1- 0 377 089
- DE-B3- 10 311 529
- US-A- 2 772 076
- US-B1- 6 845 813

## Beschreibung

### TECHNISCHES GEBIET

Die Erfindung betrifft einer Rohrbündel-Wärmetauscher mit Vorrichtung zur Einflussnahme auf die Strömung im Bereich einer Rohrträgerplatte, insbesondere für die Nahrungsmittel- und Getränkeindustrie, mit einem von einem Außenmantel umgebenen Außenkanal für ein Wärmeträgermedium, mit einer Anzahl von sich achsparallel zum Außenmantel durch den Außenkanal erstreckenden, gemeinsam einen Innenkanal bildenden, endseitig jeweils in der Rohrträgerplatte abgestützten Innenrohren, mit einem für alle Innenrohre gemeinsamen, in einem Austauscherflansch ausgebildeten Eintritt oder Austritt und einem gemeinsamen, in einem Anschlussstutzen ausgebildeten Austritt bzw. Eintritt für ein Produkt, und mit wenigstens einem die Strömung im Bereich der Rohrträgerplatte beeinflussenden Verdrängerkörper, der unverrückbar befestigt und der axialsymmetrisch und konzentrisch zur Rohrträgerplatte angeordnet ist, der aus zwei Abschnitten gebildet wird, die an ihrem Verbindungsquerschnitt einen größten gemeinsamen Außendurchmesser ausbilden, mit dem der Verdrängerkörper, der die Strömung zum oder aus dem Innenkanal axialsymmetrisch teilt, nach außen umlenkt und dabei in einem zwischen dem Verdrängerkörper und einer Innenkontur des Austauscherflansches bzw. Anschlussstutzens düsenartig verengten Ringspaltquerschnitt beschleunigt und der nachfolgend zusammen mit der Innenkontur einen sich erweiternden Ringspaltquerschnitt bildet

### STAND DER TECHNIK

Eine Vorrichtung der gattungsgemäßen Art ist aus der DE 103 11 529 B3 oder der WO 2004/083761 A1 bekannt. Der in Frage kommenden Rohrbündel-Wärmeaustauscher ist in der DE 94 03 913 U1 beschrieben. Einen jüngeren diesbezüglicher Stand der Technik, der sich prinzipiell jedoch nicht gegenüber dem älteren Rohrbündel-Wärmeaustauscher unterscheidet, beschreibt die Firmendruckschrift "Röhrenwärmetauscher VARITUBE^{®}", GEA Tuchenhagen, Liquid Processing Division, 632d-00, aus dem Jahre 2000.

Derartige Rohrbündel-Wärmeaustauscher sind aufgrund ihrer Querschnittsgeometrie generell besser als andere Wärmeaustauscher-Bauarten, wie beispielsweise Platten-Wärmeaustauscher, geeignet zur thermischen Behandlung von Produkten mit hohen und niedrigen Viskositäten, von feststoffhaltigen Produkten mit ganzen Stücken, Pulpe oder Fasern. Gleichwohl ist auch hier zu beobachten, dass sich bei faserigen Medien, beispielsweise Säften mit Fruchtfleisch, Ablagerungen an den Eintrittsöffnungen der Innenrohre der Rohrträgerplatten bilden. Die Behandlung bei relativ hohen Temperaturen begünstigt die Agglomeration von Fasern und die Bildung von Pulpe. Diese lagern sich bevorzugt an den Stegen zwischen den mehrfach parallel angeordneten Innenrohren und an den quer zur Strömungsrichtung orientierten Flächen der Rohrträgerplatte ab und können dort zu Verstopfungen führen. Temporäre Ablagerungen lösen sich von Zeit zu Zeit und die Klumpen gelangen dann ggf. in die für den Endverbraucher bestimmte Verpackung mit dem jeweiligen Produkt, wo sie unerwünscht und in jedem Falle zu vermeiden sind.

Das vorstehend geschilderte Problem wird durch eine in der DE 103 11 529 B3 oder WO 2004/083761 A1 vorgeschlagene Vorrichtung außerordentlich befriedigend gelöst, allerdings nur dann, wenn bei neu zu bauenden Rohrbündel-Wärmeaustauschern auf ein aktives Mittenrohr im Zentrum der Rohrträgerplatte verzichtet wird oder werden kann, damit an dieser zentralen Stelle der Verdrängerkörper mit der Rohrträgerplatte eine feste, unverrückbare Verbindung erfährt. Geometrisch optimale Rohrteilungen mit 7, 19, 37 und mehr Rohren, die alle ein aktives Mittenrohr beinhalten, sind dann nicht möglich. Auf eine aus diesen sog. Rohrspiegelteilungen resultierende Optimierung der hydraulischen Gestaltung von Rohrbündel-Wärmeaustauschern muss daher bislang verzichtet werden, soll der Verdrängerkörper, wie im vorg. Stand der Technik vorgesehen, im Zentrum der Rohrträgerplatte befestigt werden.

Zur Nachrüstung der Rohrträgerplatte jedweder Rohrspiegelteilung (mit oder ohne aktives Mittenrohr) mit einem Verdrängerkörper der in Rede stehenden Art wird im vorg. Stand der Technik darüber hinaus vorgeschlagen, den Verdrängerkörper als Kugel auszubilden, die vor der Rohrträgerplatte frei beweglich positioniert ist. Eine derartige Kugel ist einem gewissen Verschleiß unterworfen, was beim Einsatz der Rohrbündel-Wärmeaustauscher in sensiblen Bereichen der Nahrungs- und Getränkeindustrie als hygienisch bedenklich zu bewerten ist.

Es ist Aufgabe der vorliegenden Erfindung, unter Vermeidung hygienisch, reinigungstechnisch und strömungsphysikalisch problematischer Lösungen einen Rohrbündel-Wärmetauscher der gattungsgemäßen Art derart weiterzubilden, dass Ablagerungen aus feststoffhaltigen Produkten in den kritischen Bereichen der Rohrträgerplatte nach wie vor verhindert werden, ohne dass letztere hinsichtlich wünschenswerter Rohrspiegelteilungen Einschränkungen unterliegt, und dass darüber hinaus eine einfache Nachrüstung bestehender Rohrbündel-Wärmeaustauscher mit einem strömungsmechanisch wirksamen Verdrängerkörper ohne die bislang bekannten Nachteile möglich ist.

### ZUSAMMENFASSUNG DER ERFINDUNG

Diese Aufgabe wird durch einen Rohrbündel-Wärmetauscher mit den Merkmalen des Anspruchs 1 gelöst. Vorteilhafte Ausführungsformen der Vorrichtung sind Gegenstand der Unteransprüche.

Die erfindungsgemäße feste Verbindung des Verdrängerkörpers über einen sich in Richtung seiner Symmetrieachse erstreckenden Schaftteil mit einem/einer sich an den Austauscherflansch oder den Anschlussstutzen anschließenden Verbindungsbogen oder Verbindungsarmatur führt zu einer Entkopplung der Funktion des Verdrängerkörpers von der konstruktiven Gestaltung der Rohrträgerplatte, ohne dass die in der DE 103 11 529 B3 oder der WO 2004/083761 A1 beschriebenen bewährten strömungsmechanischen Mechanismen des bekannten Verdrängerkörpers verloren gehen. Es können jetzt auch die geometrisch optimalen Rohrspiegelteilungen mit 7, 19, 37 und mehr Rohren, die alle ein aktives Mittenrohr enthalten, eingesetzt werden, was auch eine Optimierung der hydraulischen Gestaltung der Rohrbündel-Wärmeaustauscher für alle derzeit verwendeten Rohrgrößen ermöglicht.

Durch die konstruktive Trennung des Verbindungsbogens oder der -armatur in Verbindung mit jeweils seinem/seinen Verdrängerkörper/n einerseits von dem/den Rohrbündel/n und seinen Rohrträgerplatten andererseits ist auch eine sehr einfache und sehr kostengünstige Nachrüstung bestehender Rohrbündel-Wärmeaustauscher unterschiedlichster Hersteller möglich. Diese Nachrüstung erstreckt sich auch auf vorhandene Verbindungsbogen, in die die Verdrängerkörper nachträglich leicht eingebracht und befestigt werden können.

Mit der erfindungsgemäßen Lösung sind alle denkbaren Anordnungen des Verdrängungskörpers möglich. Ein erster Vorschlag sieht vor, dass der Verdrängerkörper auf der Anströmseite der Rohrträgerplatte angeordnet ist, sodass hier die in Rede stehenden Ablagerungen wirksam verhindert werden.

Gemäß einem zweiten Vorschlag ist der Verdrängerkörper oder der zweite Verdrängerkörper auf der Abströmseite der Rohrträgerplatte angeordnet ist, wodurch infolge der generierten Querströmung zur Rohrträgerplatte und in Verbindung mit einer lokal an der Rohrträgerplatte erhöhten Strömungsgeschwindigkeit ein verbesserter Reinigungseffekt bei der Durchflussreinigung (sog. CIP-Reinigung) erzielt wird. Dies ist immer dann hilfreich, wenn z. B. Anbrennungen von Milch in Hocherhitzungs-Abteilungen von Rohrbündel-Wärmeaustauscher-Anlagen mittels einer CIP-Reinigung beseitigt werden sollen.

Ein weiterer Vorschlag sieht vor, dass der Verdrängerkörper auf der Anströmseite und dass der Verdrängerkörper oder der zweite Verdrängerkörper auf der Abströmseite der Rohrträgerplatte angeordnet sind. Dadurch lassen sich die beiden vorgenannten vorteilhaften Wirkungen an einem Rohrbündel zusammenführen, sodass zum einen Ablagerungen vermieden werden und zum anderen die Reinigung verbessert wird.

Der vorgenannte Vorschlag gestaltet sich dann besonders einfach und vorteilhaft, wenn die Verdrängerkörper in einem/einer einzigen, jeweils zwei benachbarte, im Wesentlichen parallel angeordnete, in Reihe geschaltete Rohrbündel des Rohrbündel-Wärmeaustauschers miteinander verbindenden Verbindungsbogen oder Verbindungsarmatur angeordnet sind.

Die angestrebte strömungsmechanische Wirkung des Verdrängerkörpers erwächst unter anderem aus dem Ringspaltquerschnitt zwischen letzterem und einer Innenkontur des Austauscherflansches bzw. des Anschlussstutzens. Der Verdrängerkörper beeinflusst die ihn umgebende Strömung dann besonders wirksam, wenn, wie dies ein weiterer Vorschlag vorsieht, diese Innenkontur von einem ersten bzw. zweiten erweiterten Durchtrittsquerschnitt innerhalb des Austauscherflansches bzw. des Anschlussstutzens gebildet ist.

Die wünschenswerte Ablösung der Strömung wird gemäß einer vorteilhaften Ausgestaltung durch eine am Verdrängerkörper ausgeführte umlaufende Strömungsabrisskante herbeigeführt. Diese Strömungsabrisskante ist dann besonders wirksam, wenn sie, wie dies auch vorgesehen ist, im erweiterten Durchtrittsquerschnitt des Austauscherflansches, bzw. des Anschlussstutzens positioniert ist.

Die strömungsmechanische Funktion des vorgeschlagenen Verdrängerkörpers kommt besonders vorteilhaft zum Tragen, wenn, wie dies eine weitere vorteilhafte Ausführungsform vorsieht, die Strömungsabrisskante an der engsten Stelle (minimaler Rinspaltquerschnitt A_{Smin}) des Ringspaltquerschnittes (A_{S}) positioniert ist.

Eine weitere diesbezügliche Ausführungsform sieht vor, die Strömungsabrisskante, in Strömungsrichtung gesehen, hinter der engsten Stelle (minimaler Rinspaltquerschnitt A_{Smin}) des Ringspaltquerschnittes (A_{S}) zu positionieren.

Zur Sicherstellung einer hinreichenden Wirksamkeit der vorgeschlagenen Maßnahmen wird, gemäß einem weiteren Vorschlag der Erfindung, ein Außendurchmesser des Verdrängerkörpers derart bemessen, dass der durch einen jeweiligen Rohrinnendurchmesser gebildeter Durchtrittsquerschnitt der am äußeren Rand der Rohrträgerplatte gelegenen Innenrohre jeweils etwa zur Hälfte durch eine in Richtung der Rohrträgerplatte projizierte Anströmfläche des Verdrängerkörpers abgedeckt ist.

Die Anforderungen, die an den Verdrängerkörper gestellt werden, bestehen nicht nur darin, dass er eine besonders wirksame Einflussnahme auf die Strömung im Bereich der Rohrträgerplatte ausübt, sondern er ist auch dahingehend auszugestalten, dass er möglichst geringe Druckverluste bewirkt und nicht selbst zu einem Problem für Ablagerungen wird. Eine vorteilhafte Ausführungsform sieht diesbezüglich vor, dass die Abschnitte des Verdrängerkörpers axialsymmetrisch ausgeführt sind und am Verbindungsquerschnitt miteinander die Strömungsabrisskante ausbilden.

Es ist in diesem Zusammenhang von Vorteil, wenn die Abschnitte jeweils durch eine konkave Außenkontur berandet sind. Zur Befestigung des Verdrängerkörpers an dem Verbindungsbogen oder der Verbindungsarmatur ist vorgesehen, dass der Schaftteil stetig in den benachbarten Abschnitt übergeht, wodurch die Strömungswiderstände klein gehalten werden.

Wünschenswerte Ablösung und Querströmung im Bereich der Rohrträgerplatte werden gemäß einem weiteren Vorschlag dadurch begünstigt, dass eine endseitige Begrenzungsfläche des schaftfernen Abschnitts eine zweite umlaufende Strömungsabrisskante ausbildet.

Es ist bekannt, die produktdurchströmten Innenrohre jeweils zweier benachbarter, im Wesentlichen parallel angeordneter, in Reihe geschalteter Rohrbündel von Rohrbündel-Wärmeaustauschern, wie sie beispielsweise aus der Druckschrift DE 94 03 913 U1 bekannt sind, jeweils über 180 Grad Rohrbogen miteinander zu verbinden (siehe auch WO 2004/051 174 A1 oder WO 2004/083 761 A1). In den dort gewählten Darstellungen sind die in Frage kommenden Verbindungsbogen bzw. -armaturen jeweils nur zur Hälfte dargestellt.

Die vorliegende Erfindung verwendet eine derartige Verbindungsarmatur und befestigt erfindungsgemäß in dieser den oder die Verdrängerkörper der vorbeschriebenen Art. Dabei sieht ein Vorschlag vor, dass jeder Rohrträgerplatte im Rahmen der Ausgestaltung der Verbindungsarmatur eine erste oder zweite Wirbelkammer zugeordnet ist, und dass die erste und die zweite Wirbelkammer mit einem im Wesentlichen sich linear erstreckenden Verbindungskanal strömungsdurchlässig miteinander verbunden sind, der senkrecht zur Längsrichtung der Rohrbündel orientiert ist.

Der grundlegende erfinderische Gedanke dieser Ausgestaltung besteht darin, im Gegensatz zu den bislang beschrittenen Wegen, einen die jeweiligen Innenrohre durchströmenden Produktstrom, der, wenn er die Innenrohre an der Rohrträgerplatte verlässt (Austrittsbereich), zu einem austretenden Produktstrom wird und, bevor er in die Innenrohre im Bereich der Rohrträgerplatte eintritt (Eintrittsbereich), zu einem eintretenden Produktstrom wird, im Bereich der 180 Grad-Umlenkung nicht möglichst strömungsgünstig zu handhaben und zu führen, sondern bewusst und planmäßig Turbulenzen und Wirbel in diesem Austritts- und Eintrittsbereich zu erzeugen. Diese Turbulenzen und Wirbel üben durch turbulenten Queraustausch zusätzlich einen abreinigenden Effekt auf die jeweilige Rohrträgerplatte aus und unterstützen somit die Funktion des Verdrängerkörpers.

Die angeströmte Rohrträgerplatte erfährt durch die Turbulenzen und Wirbel im vorgeordneten Eintrittsbereich, wie dies nachvollziehbar ist, deutlich geringere Ablagerungen als mit Anordnungen nach dem Stand der Technik. Es kann hier jedoch vermerkt werden, dass dieser Reinigungseffekt in überraschender Weise auch an der abgeströmten Rohrträgerplatte gleichermaßen zu verzeichnen ist, wo sozusagen die erzeugten Turbulenzen und Verwirbelungen quasi, in Strömungsrichtung gesehen, rückwirkend die gewünschte Wirkung entfalten.

Die Erfindung schlägt mit Blick auf die konkrete Ausgestaltung der Verbindungsarmatur eine Ausführungsform vor, bei der die erste und die zweite Wirbelkammer jeweils topfförmig mit einem mantelförmigen Kammergehäuse und einem im Wesentlichen ebenen Kammerboden ausgeführt ist, bei der an dem dem Kammerboden abgewandten offenen Ende ein zur Rohrträgerplatte hin abdichtbarer Kammerflansch angeordnet ist, bei der im mantelförmigen Kammergehäuse ein Kammeranschluss vorgesehen ist und bei der der jeweilige Kammeranschluss mit einem Verbindungsgehäuse verbunden ist.

Die vorstehend kurz umrissene Ausführungsform legt sich noch nicht auf spezielle Querschnittsausgestaltungen mit Blick auf kreisförmige, quadratische oder rechteckförmige Durchtrittsquerschnitte fest, sondern sie gibt Hinweise auf geometrische Grundformen, die zu verwirklichen sind. Dabei ist es strömungstechnisch von Vorteil, wenn, wie dies vorgesehen ist, der jeweilige Kammeranschluss relativ kurz ausgeführt und wenn er darüber hinaus, was die Druckverluste reduziert, wenigstens innenseitig gerundet ausgebildet ist.

Die erfindungsgemäße Verbindungsarmatur ist gemäß einem weiteren Vorschlag relativ einfach aus Halbzeugen durch stoffschlüssige Verbindung, vorzugsweise Schweißung, herstellbar, wenn, wie dies auch vorgeschlagen wird, für das Kammergehäuse und das Verbindungsgehäuse jeweils ein kreisförmiges Rohr Verwendung findet und der Kammeranschluss jeweils als Aushalsung ausgeführt ist.

Die Erfindung schlägt weiterhin eine Verbindungsarmatur in einer zweiten Ausführungsform vor, die dann zu bevorzugen ist, wenn auf der Abströmseite der Rohrträgerplatte keine die Strömung beeinflussende Maßnahmen erforderlich sind. Diese Ausführungsform zeichnet sich dadurch aus, dass der angeströmten Rohrträgerplatte eine erste Wirbelkammer zugeordnet ist, die über einen sich zunächst im Wesentlichen linear und senkrecht zur Längsrichtung der Rohrbündel erstreckenden Verbindungskanal und anschließend über einen 90 Grad Umlenkbogen strömungsdurchlässig mit dem Austauscherflansch oder dem Anschlussstutzen verbunden ist. Diese Lösung vereinigt in sich die Vorteile der Kombination einer Wirbelkammer mit einem darin angeordneten Verdrängerkörper im Bereich der angeströmten Rohrträgerplatte und eines sich in Querrichtung erstreckenden Verbindungskanal einerseits mit den an sich bekannten Gegebenheiten eines Rohrbogens im Bereich der Abströmseite der Rohrträgerplatte andererseits.

Einzelheiten der konkreten Ausgestaltung der letztgenannten Wirbelkammer und des zugeordneten Verbindungsgehäuses entsprechen dabei der vorstehend beschriebenen Ausführungsform, bei der zwei Wirbelkammern über das Verbindungsgehäuse miteinander verbunden sind.

### KURZBESCHREIBUNG DER ZEICHNUNGEN

Ausgehend vom Stand der Technik zeigt
- **Figur 1**: einen Mittelschnitt durch ein sog. Rohrbündel als modularer Teil eines ggf. aus einer Vielzahl solcher Rohrbündel bestehenden Rohrbündel-Wärmeaustauschers, wobei auf jeder Seite ein kreisförmiger Verbindungsbogen angeordnet ist, auf den die erfindungsgemäßen Merkmale Anwendung finden;

Ausführungsbeispiele des vorgeschlagenen Rohrbündel-Wärmetauschers gemäß der Erfindung sind in den weiteren Figuren der Zeichnung dargestellt und werden nachfolgend beschrieben. Es zeigen
- **Figur 2**: einen Mittelschnitt durch die vorgeschlagene Verbindungsarmatur in einer ersten Ausführungsform, wobei ein Verdrängerkörper auf der Anströmseite einer nicht dargestellten Rohrträgerplatte innerhalb einer zweiten Wirbelkammer angeordnet ist;
- **Figur 2a**: einen Mittelschnitt durch die Verbindungsarmatur gemäß **Figur 2** mit einem weiteren, in einer ersten Wirbelkammer angeordneten Verdrängerkörper, wobei letzterer auf der Abströmseite einer nicht dargestellten Rohrträgerplatte angeordnet ist;
- **Figur 3**: einen Mittelschnitt durch die Verbindungsarmatur gemäß **Figur 2** mit einem weiteren, gegenüber **Figur 2a** modifizierten Verdrängerkörper, der in der ersten Wirbelkammer angeordnet ist;
- **Figur 4**: einen Mittelschnitt durch die vorgeschlagene Verbindungsarmatur in einer zweiten Ausführungsform, wobei ein Verdrängerkörper auf der Anströmseite einer nicht dargestellten Rohrträgerplatte innerhalb der ersten Wirbelkammer angeordnet ist und letztere über einen linearen Verbindungskanal und anschließend über einen 90 Grad Umlenkbogen mit einem Austauscherflansch oder einem Anschlussbogen verbunden ist;
- **Figur 5a**: teilweise im Schnitt und teilweise in der Ansicht ein 180 Grad Verbindungsbogen nach dem Stand der Technik für RohrbündelWärmeaustauscher, wobei dieser Verbindungsbogen im Bereich einer Rohrträgerplatte im Zuge einer Nachrüstung mit einem Verdrängerkörper bestückt wurde und
- **Figur 5b**: die Seitenansicht des Verbindungsbogens gemäß **Figur 5a****.**

### DETAILLIERTE BESCHREIBUNG

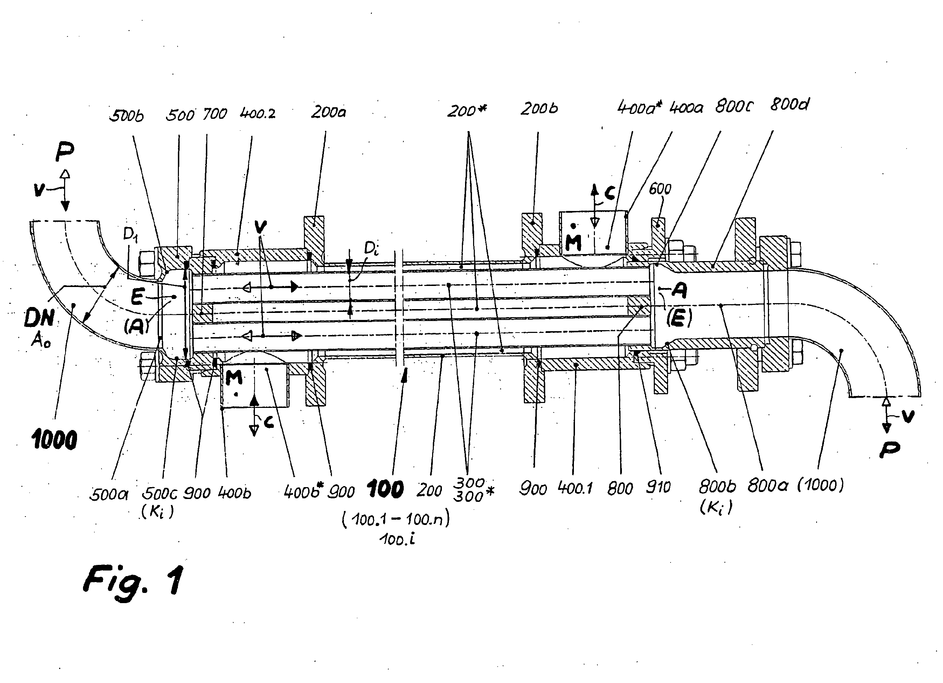

Ein in der Regel aus einer Vielzahl von Rohrbündeln 100.1 bis 100.n zusammengesetzter Rohrbündel-Wärmeaustauscher 100 nach dem Stand der Technik, wobei mit 100.i ein beliebiges Rohrbündel bezeichnet wird (**Figur 1****;** siehe auch DE 94 03 913 U1), besteht in seinem mittleren Teil aus einem einen Außenkanal 200* begrenzenden Außenmantel 200 mit einem, bezogen auf die Darstellungslage, linksseitig angeordneten festlagerseitigen Außenmantelflansch 200a und einem rechtsseitig angeordneten loslagerseitigen Außenmantelflansch 200b. An dem letzteren schließt sich ein von einem ersten Gehäuse 400.1 begrenzter erster Querkanal 400a* mit einem ersten Anschlussstutzen 400a und an den festlagerseitigen Außenmantelflansch 200a schließt sich ein von einem zweiten Gehäuse 400.2 begrenzter zweiter Querkanal 400b* mit einem zweiten Anschlussstutzen 400b an. Eine Anzahl von sich achsparallel zum Außenmantel 200 durch den Außenkanal 200* erstreckenden, gemeinsam einen Innenkanal 300* bildenden Innenrohre 300, beginnend mit vier und danach auch bis neunzehn ansteigend und ggf. auch mehr an der Zahl, sind endseitig jeweils in einer festlagerseitigen Rohrträgerplatte 700 bzw. einer loslagerseitigen Rohrträgerplatte 800 (beide auch als Rohrspiegelplatte bezeichnet) abgestützt und an ihrem Rohraußendurchmesser in dieser verschweißt, wobei diese Gesamtanordnung über eine nicht näher bezeichnete Öffnung am zweiten Gehäuse 400.2 in den Außenmantel 200 eingeführt und über einen festlagerseitigen Austauscherflansch 500 mit dem zweiten Gehäuse 400.2 unter Zwischenschaltung von jeweils einer Flachdichtung 900 zusammengespannt ist (Festlager 500, 700, 400.2).

Die beiden Gehäuse 400.1, 400.2 sind gegenüber dem jeweils benachbarten Außenmantelflansch 200b, 200a ebenfalls mit einer Flachdichtung 900 abgedichtet, wobei das rechtsseitig angeordnete erste Gehäuse 400.1 in Verbindung mit dem Außenmantel 200 über einen loslagerseitigen Austauscherflansch 600 unter Zwischenschaltung eines O-Ringes 910 gegen das linksseitig angeordnete Festlager 500, 700, 400.2 gepresst wird. Die loslagerseitige Rohrträgerplatte 800 greift durch eine nicht näher bezeichnete Bohrung im loslagerseitigen Austauscherflansch 600 hindurch und findet gegenüber letzterem ihre Abdichtung mittels des dynamisch beanspruchten O-Ringes 910, der darüber hinaus das erste Gehäuse 400.1 statisch gegen den loslagerseitigen Austauscherflansch 600 abdichtet. Letzterer und die loslagerseitige Rohrträgerplatte 800 bilden ein sog. Loslager 600, 800, welches die Längenänderungen der in der loslagerseitigen Rohrträgerplatte 800 eingeschweißten Innenrohre 300 infolge Temperaturänderung in beiden axialen Richtungen zulässt.

Abhängig von der Anordnung des jeweiligen Rohrbündels 100.1 bis 100.n im Rohrbündel-Wärmeaustauscher 100 und seiner jeweiligen Beschaltung können die Innenrohre 300, bezogen auf die Darstellungslage, entweder von links nach rechts oder umgekehrt von einem Produkt P durchströmt werden, wobei die mittlere Strömungsgeschwindigkeit im Innenrohr 300 und damit im Innenkanal 200* mit v gekennzeichnet ist. Die querschnittsmäßige Auslegung erfolgt in der Regel derart, dass diese mittlere Strömungsgeschwindigkeit v auch in einem Verbindungsbogen 1000 vorliegt, der einerseits mit dem festlagerseitigen Austauscherflansch 500 und andererseits mittelbar mit einem mit der loslagerseitigen Rohrträgerplatte 800 fest verbundenen loslagerseitigen Anschlussstutzen 800d verbunden ist. Mit den beiden in der Zeichnung nur jeweils zur Hälfte dargestellten Verbindungsbogen 1000 (sog. 180 Grad-Rohrbogen) wird das in Rede stehende Rohrbündel 100.i mit dem jeweils benachbarten Rohrbündel 100.i-1 bzw. 100.i+1 in Reihe geschaltet. Daher bildet einmal der festlagerseitige Austauscherflansch 500 einen Eintritt E für das Produkt P und der loslagerseitige Anschlussstutzen 800d beherbergt einen dazugehörenden Austritt A; beim jeweils benachbarten Rohrbündel 100.i-1 bzw. 100.i+1 kehren sich diese Ein- und Austrittsverhältnisse jeweils entsprechend um.

Der festlagerseitige Austauscherflansch 500 weist eine erste Anschlussöffnung 500a auf, die einem Nenndurchmesser DN und damit einem Nenndurchtrittsquerschnitt A₀ des dort angeschlossenen Verbindungsbogens 1000 entspricht und die in der Regel so bemessen ist, dass dort die der mittleren Strömungsgeschwindigkeit v im Innenrohr 300 bzw. Innenkanal 300* entsprechende Strömungsgeschwindigkeit vorliegt. In gleicher Weise ist auch eine zweite Anschlussöffnung 800a in dem loslagerseitigen Anschlussstutzen 800d bemessen, wobei sich die jeweilige Anschlussöffnung 500a bzw. 800a auf einen jeweils erweiterten Durchtrittsquerschnitt 500c bzw. 800c im Bereich zur benachbarten Rohrträgerplatte 700 bzw. 800 durch einen konischen Übergang 500b bzw. 800b erweitert. Der erweiterte Durchtrittsquerschnitt 500c bzw. 800c ist dabei im Wesentlichen zylindrisch mit einem Durchmesser D₁ (größter Durchmesser des ersten erweiterten Durchtrittsquerschnitts 500c) ausgeführt, wobei letzterer in der Regel ein bis zwei Nennweiten größer als der Nenndurchmesser DN des Verbindungsbogens 1000 (Nenndurchtrittsquerschnitt Aₒ des Verbindungsbogens) und demnach entsprechend größer als der Gesamtdurchtrittsquerschnitt nAᵢ aller in den festlagerseitigen Austauscherflansch 500 eintretenden Innenrohre 300 mit einem jeweiligen Rohrinnendurchmesser Dᵢ und einem Durchtrittsquerschnitt Aᵢ dimensioniert ist. Der erweiterte Durchtrittsquerschnitt 500c bzw. 800c bildet zusammen mit dem ersten konischen Übergang 500b bzw. 800b eine Innenkontur Kᵢ im festlagerseitigen Austauscherflansch 500 bzw. im loslagerseitigen Anschlussstutzen 800d aus. In Abhängigkeit von der Richtung der Strömungsgeschwindigkeit v im Innenrohr 300 bzw. Innenkanal 300* strömt das zu behandelnde Produkt P entweder über die erste Anschlussöffnung 500a oder die zweite Anschlussöffnung 800a dem Rohrbündel 100.1 bis 100.n zu, sodass entweder die festlagerseitige Rohrträgerplatte 700 oder die loslagerseitige Rohrträgerplatte 800 angeströmt wird. Da in jedem Falle ein Wärmeaustausch zwischen Produkt P in den Innenrohren 300 bzw. den Innenkanälen 300* und einem Wärmeträgermedium M im Außenmantel 200 bzw. in den Außenkanälen 200* im Gegenstrom zu erfolgen hat, strömt dieses Wärmeträgermedium M entweder dem ersten Anschlussstutzen 400a oder aber dem zweiten Anschlussstutzen 400b mit einer im Außenmantel 200 vorliegenden Strömungsgeschwindigkeit c zu.

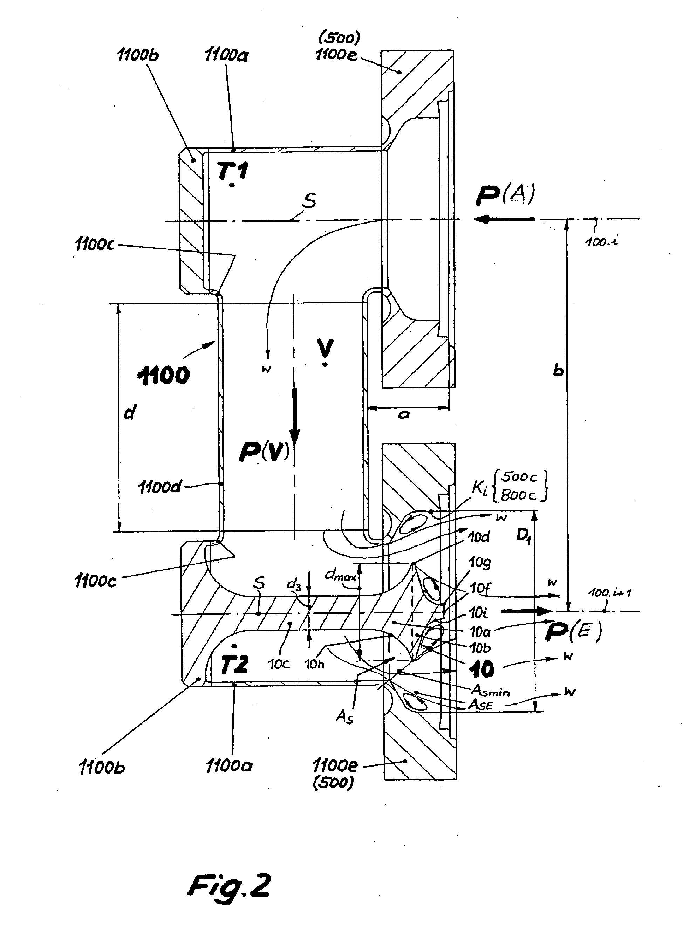

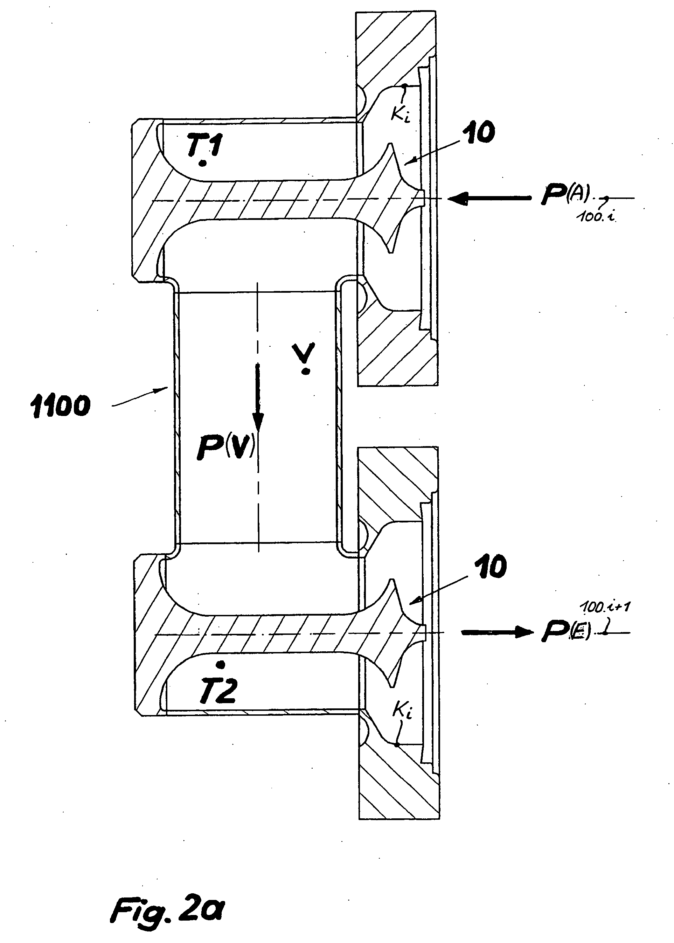

Eine efindungsgemäße Verbindungsarmatur 1100 (**Figur 2**) ist, bezogen auf eine quer zu einem Verbindungskanal V verlaufende Symmetrieachse S, symmetrisch aufgebaut und sie besitzt eine erste und eine zweite Wirbelkammer T1, T2. Diese sind mit dem sich linear erstreckenden Verbindungskanal V strömungsdurchlässig miteinander verbunden, wobei letzterer senkrecht zu den Längsachsen der nicht dargestellten Rohrbündel 100.i, 100.i+1, die einen mittleren Abstand b voneinander haben und in der Regel mit der zugeordneten Symmetrieachse fluchten, orientiert ist.

Die Verbindungsarmatur 1100 wird im vorliegenden Fall von einem im oberen Teil der Figur 2 dargestellten Kammerflansch 1100e (z.B. auch festlagerseitiger Austauscherflansch 500 des Rohrbündels 100.i) zu einem im unteren Teil der Figur 2 gleichfalls dargestellten Kammerflansch 1100e (z.B. auch festlagerseitiger Austauscherflansch 500 des Rohrbündels 100.i+1) durchströmt. Ein aus der nicht dargestellten Rohrträgerplatte 700, 800 (s. hierzu auch Figur 1) austretender Produktstrom P(A) strömt in die erste Wirbelkammer T1 ein und wird dort unstetig um 90 Grad in den Verbindungskanal V umgelenkt. Durch diese unstetige Umlenkung werden in der ersten Wirbelkammer T1 Turbulenzen und Wirbel erzeugt, die rückwirkend den abgeströmten Bereich der nicht dargestellten Rohträgerplatte 700, 800 weitestgehend von Ablagerungen freihalten. In dem Verbindungskanal V bildet sich ein querströmender Produktstrom P(V) (Querstrom) aus.

Der querströmende Produktstrom P(V) gelangt nunmehr in die zweite Wirbelkammer T2 und wird hier ein weiteres mal unstetig um 90 Grad umgelenkt. Diese neuerliche unstetige Umlenkung erzeugt auch in der zweiten Wirbelkammer T2 Turbulenzen und Wirbel, sodass der nunmehr diesbezüglich entstehende Produktstrom, ein eintretender Produktstrom P(E), eine nicht dargestellte Rohrträgerplatte 700, 800 (s. hierzu auch Figur 1) des Rohrbündels 100.i+1 beaufschlagt und dort zusätzlich zur strömungsmechanischen Wirkung eines in der zweiten Wirbelkammer T2 angeordneten Verdrängerkörpers 10 die gewünschte strömungsbeeinflussende Wirkung erzeugt.

Die erste und die zweite Wirbelkammer T1, T2 sind jeweils topfförmig mit einem mantelförmigen Kammergehäuse 1100a und einem im Wesentlichen ebenen Kammerboden 1100b ausgeführt, wobei für das mantelförmige Kammergehäuse 1100a vorzugsweise ein kreisförmiges Rohr Verwendung findet.

An dem dem Kammerboden 1100b abgewandten offenen Ende ist der zur Rohträgerplatte 700, 800 hin abdichtbarer Kammerflansch 1100e angeordnet, in dem jeweils eine nicht bezeichnete Dichtungsausnehmung für die Flachdichtung 900 oder eine anders geformte Dichtung vorgesehen ist. In jedem Kammergehäuse 1100a ist jeweils ein Kammeranschluss 1100c in Form einer Aushalsung vorgesehen, wobei die beiden Kammeranschlüsse 1100c mit einem den Verbindungskanal V berandenden Verbindungsgehäuse 1100d, welches vorzugsweise als kreisförmiges Rohr mit einer Länge d ausgeführt ist, verbunden sind.

Die den beiden benachbarten Rohrträgerplatten 700 oder 800 zugewandte Mantellinie des rohrförmigen Verbindungsgehäuses 1100d ist so nah wie konstruktiv möglich an diese beiden Rohrträgerplatten 700, 800 herangeführt (Abstand des Verbindungskanals a). Der Innendurchmesser des Verbindungsgehäuses 1100d kann relativ flexibel gestaltet werden, da sich hier kein Rohrbogen anschließt und daher keine Rücksicht auf einen diesbezüglichen Krümmungsradius zu nehmen ist. Der Abstand des Verbindungskanals a bestimmt sich allein aus den axialen Abmessungen der Kammerflansche 1100e zuzüglich eines kleinen Sicherheitsabstandes. Der jeweilige Kammerflansche 1000e ist mit dem zugeordneten Kammergehäuse 1100a innenseits spaltfrei verschweißt. Eine nicht bezeichnete Entlastungsnut, die auf der der Dichtungsausnehmung abgewandten Stirnfläche des Kammerflansches 1100e vorgesehen ist, erleichtert eine Rundumverschweißung mit dem rohrförmigen Kammergehäuse 1100a.

Zwei benachbarte Rohrbündel 100.i, 100.i+1 können so nah, wie dies konstruktiv möglich ist, nebeneinander platziert werden (mittlerer Abstand der Rohrträgerplatten b). Die Verbindungsarmatur 1100 stellt diesbezüglich kein limitierendes Bauteil dar, da jeder axiale Abstand zwischen den beiden Kammeranschlüssen 1100c durch das in der Länge d flexibel anpassbare Verbindungsgehäuse 1100d zu überbrücken ist.

Die vorstehend beschriebene erfindungsgemäße Verbindungsarmatur 1100 ist beispielhaft im bevorzugten Bereich der festlagerseitigen Rohrträgerplatten 700 angeordnet. Prinzipiell lassen sich die der Auslegung der Verbindungsarmatur 1100 zugrunde liegenden Strömungsprinzipien jedoch auch auf den Bereich der loslagerseitigen Rohrträgerplatte 800 übertragen.

Der Verdrängerkörper 10 ist insgesamt rotationssymmetrisch zu seiner Längsachse, der Symmetrieachse S, ausgebildet und besteht aus einem vorzugsweise zylindrischen Schaftteil 10c, der einen Schaftdurchmesser d₃ aufweist, und einem sich daran unmittelbar anschließenden schaftseitigen Abschnitt 10a, wobei der Übergang zwischen beiden stetig verläuft. Letzterer ist mit einem schaftfernen Abschnitt 10b verbunden, und beide Abschnitte 10a, 10b bilden an ihrem Verbindungsquerschnitt einen größten gemeinsamen Außendurchmesser dₘₐₓ aus. Der Verdrängerkörper 10 ist derart in der zweiten Wirbelkammer T2 angeordnet, dass seine Symmetrieachse S konzentrisch zur Längsachse des Rohrbündels 100.i+1 und damit konzentrisch zur Rohrträgerplatte 700, 800 ((s. hierzu auch Figur 1) verläuft. Der Schaftteil 10c ist an seinem dem Verdrängerkörper 10 abgewandten Ende mit dem Kammerboden 1100b der zweiten Wirbelkammer T2 fest verbunden. Somit realisiert die vorbeschriebene Anordnung einen auf der Anströmseite der Rohrträgerplatte 700, 800 positionierten Verdrängerkörper 10.

Die beiden Abschnitte 10a,10b bilden an ihrem Verbindungsquerschnitt eine umlaufende Strömungsabrisskante 10d aus, die innerhalb der Innenkontur Kᵢ im Kammerflansch 1100e bzw. im Austauscherflansch 500 und damit im vorliegenden Falle auch im erweiterten Durchtrittsquerschnitt 500c bzw. 800c mit dem größten Durchmesser D₁ (s. hierzu auch **Figur 1****)** positioniert ist. Der erste Abschnitt 10a ist durch eine erste konkave Außenkontur 10h und der zweite Abschnitt 10b ist durch eine zweite konkave Außenkontur 10i berandet. Die erste konkave Außenkontur 10h formt zusammen mit der Innenkontur Kᵢ einen sich düsenartig verjüngenden Ringspaltquerschnitt Aₛ, der an seiner engsten Stelle, einem minimalen Ringspaltquerschnitt A_{Smin}, einerseits von der Strömungsabrisskante 10d begrenzt ist. Die zweite konkave Außenkontur 10i bildet zusammen mit der Innenkontur Kᵢ einen sich erweiternden Ringspaltquerschnitt A_{SE}. Eine endseitige Begrenzungsfläche 10f des schaftfernen Abschnitts 10b ist in Form einer zweiten umlaufenden Strömungsabrisskante 10g ausgebildet.

Der Verdrängerkörper 10 teilt das über die zweite Wirbelkammer T2 mit einer ungleich verteilten Strömungsgeschwindigkeit w zum Innenkanal 300* (s. Figur 1) des Rohrbündels 100.i+1 strömende Produkt P(E) axialsymmetrisch über den gesamten Umfang auf und lenkt es nach außen um. Dabei wird die Strömung in dem zwischen dem Verdrängerkörper 10 und der Innenkontur Kᵢ des Kammerflansches 1100e bzw. des festlagerseitigen Austauscherflansches 500 düsenartig verengten Ringspaltquerschnitt A_{S} beschleunigt und erreicht an dessen engster Stelle, dem minimalen Ringspaltquerschnitt A_{Smin}, eine maximale Strömungsgeschwindigkeit. Die Strömungsabrisskante 10d ist im Ausführungsbeispiel an der Stelle des minimalen Ringspaltquerschnittes A_{Smin} positioniert.

Die Strömung wird hinter dem Verdrängerkörper 10 zum Zentrum der Rohrträgerplatte 700, 800 hin umgelenkt, wodurch eine möglichst gleichmäßige Durchströmung aller Innenrohre 300 bzw. Innenkanäle 300* erfolgt (s. hierzu Figur 1). Darüber hinaus erweitert sich hinter dem minimalen Ringspaltquerschnitt A_{Smin} der Durchtrittsquerschnitt für die Strömung. Die derart gekrümmte und verzögerte Strömung muss zwangsläufig in diesem Bereich ablösen. Durch die Strömungsabrissstelle 10d erfolgt die Ablösung planmäßig an dieser eindeutig definierten Stelle. Die geschilderte Strömungsbewegung hinter dem Verdrängerkörper 10 führt dort nach den strömungsmechanischen Gesetzmäßigkeiten zu einer Sekundärströmung, auf der die gewünschte Wirkung nämlich die Verhinderung von Ablagerungen auf der angeströmten Rohrträgerplatte 700, 800, zum Teil beruht.

Die in **Figur 2** dargestellte und beschriebene Verbindungsarmatur 1100 ist gemäß **Figur 2a** zusätzlich auch auf der Abströmseite des Rohrbündels 100.i und damit in der ersten Wirbelkammer T1 mit einem weiteren Verdrängerkörper 10 ausgerüstet, über den Turbulenzen und Wirbel und somit eine Querströmung über die Rohrträgerplatte 700, 800 generiert werden. In Verbindung mit einer lokal an der Rohrträgerplatte 700, 800 erhöhten Strömungsgeschwindigkeit wird dadurch ein verbesserter Reinigungseffekt bei der Durchflussreinigung (CIP-Reinigung) erzielt.

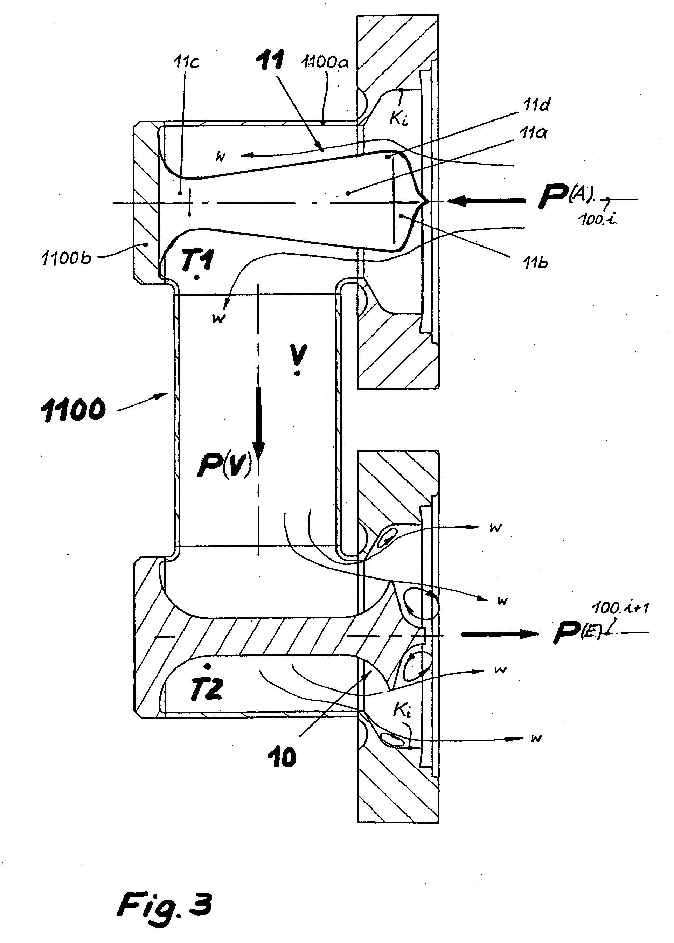

Eine zweite Ausführungsform eines auf der Abströmseite des Rohrbündels 100.i angeordneten zweiten Verdrängerkörpers 11 zeigt **Figur 3****.** Dieser zweite Verdrängerkörper 11 ist über einen zweiten Schaftteil 11 c am Kammerboden 1100b in der ersten Wirbelkammer T1 befestigt. Der zweite Verdrängerkörper 11 verzichtet am Verbindungsquerschnitt zwischen einem zweiten schaftseitigen Abschnitt 11a, der sich, in Strömungsrichtung gesehen, verjüngt, und einem schaftfernen Abschnitt 11 b auf eine umlaufende Strömungsabrisskante. Statt dessen weist er im Bereich des Verbindungsquerschnittes eine konvexe Abrundung 11 d auf. Der Zweck dieser Ausformung ist der gleiche, wie bei der Anordnung gemäß Figur 2a. Allerdings wird mit dem zweiten Verdrängerkörper 11 der Forderung Rechnung getragen, dass eine Querströmung im Bereich zwischen der Rohrträgerplatte 700, 800 und dem Verdrängerkörper 11 von Vorteil ist, dass aber, in Strömungsrichtung gesehen, eine Ablösung und Verwirbelung in die erste Wirbelkammer T1 hinein nicht erforderlich ist. Die sich in Strömungsrichtung verjüngende Form des schaftseitigen Abschnitts 11a bildet im Zusammenwirken mit der Mantelfläche des Kammergehäuses 1100a quasi einen Diffusor aus, der eine allmähliche Verzögerung der Strömung mit der Strömungsgeschwindigkeit w bewirkt und so einer Ablösung der Strömung entgegenwirkt.

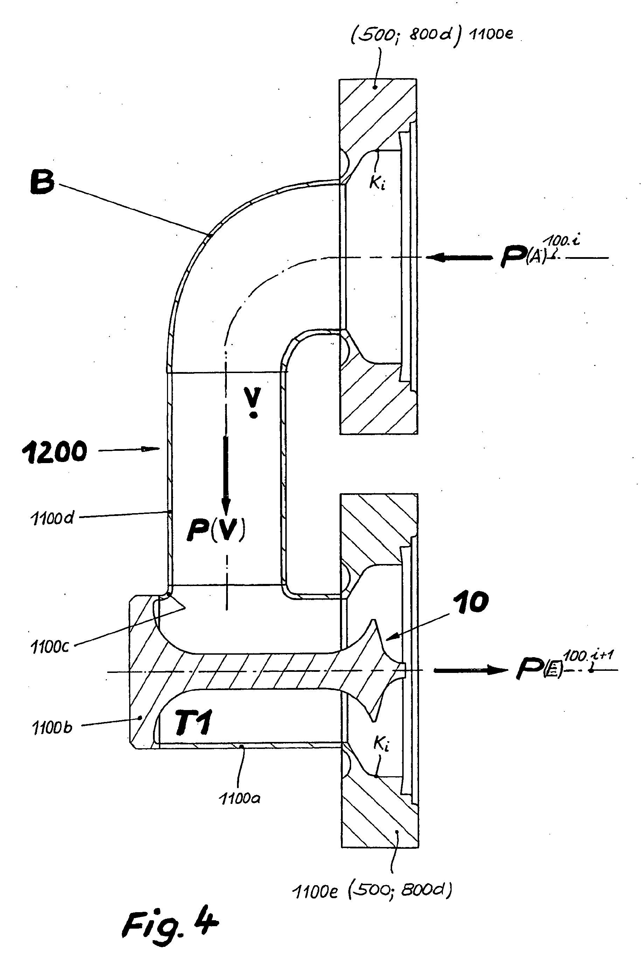

Falls sich die strömungsbeeinflussenden Maßnahmen auf die Anströmseite der Rohrträgerplatte 700, 800 beschränken, wird eine zweite Verbindungsarmatur 1200 (**Figur 4**) vorgeschlagen. Diese ist derart ausgestaltet, dass der angeströmten Rohrträgerplatte 700, 800 des Rohrbündels 100.i+1 eine erste Wirbelkammer T1 zugeordnet ist, die über den sich zunächst im Wesentlichen linear und senkrecht zur Längsrichtung der Rohrbündel 100.i, 100.i+1 erstreckenden Verbindungskanal V und anschließend über einen 90 Grad Umlenkbogen B strömungsdurchlässig mit dem am Rohrbündel 100.i angeflanschten Kammerflansch 1100e (Austauscherflansch 500 oder Anschlussstutzen 800d) verbunden ist.

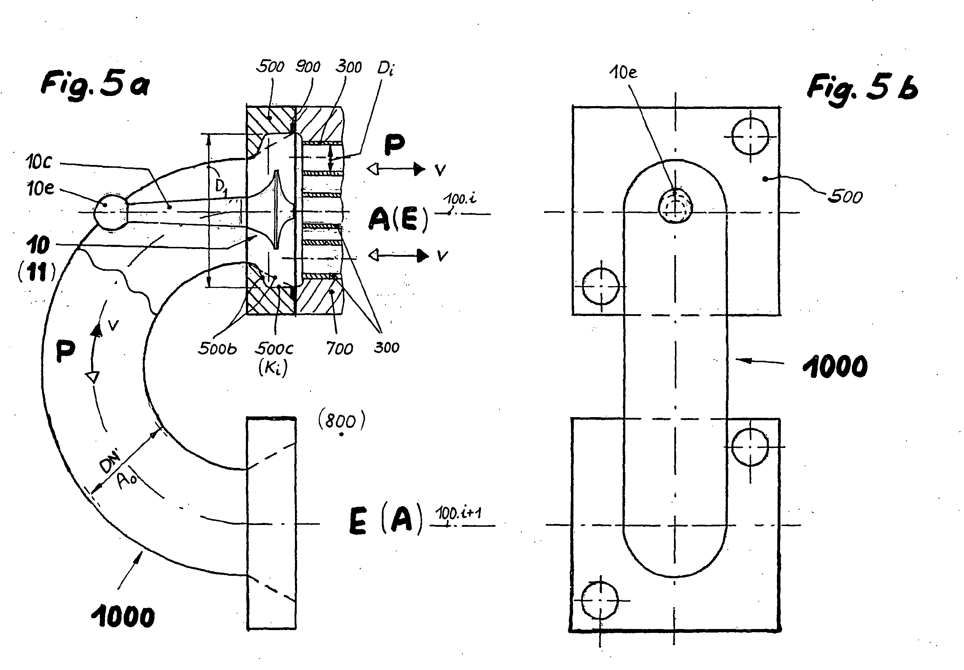

Die **Figuren 5a** und **5b** zeigen den Verbindungsbogen 1000, wie er bislang Stand der Technik ist (**Figur 1**), der die produktdurchströmten Innenrohre 300 jeweils zweier benachbarter, im Wesentlichen parallel angeordneter, in Reihe geschalteter Rohrbündel 100.i, 100i+1 im Bereich der jeweiligen Rohrträgerplatte 700, 800 miteinander verbindet.

Die vorliegende Erfindung ermöglicht auf denkbar einfache Weise die Nachrüstung dieser Verbindungsbogen 1000 mit dem/den Verdrängerkörper/n 10, 11 der in Rede stehenden Art, wobei im Ausführungsbeispiel der Verdrängerkörper 10 auf der Anströmseite der Rohrträgerplatte 700 zur Anwendung kommt. Der Schaftteil 10c des Verdrängerkörpers 10 endet in einem Befestigungsteil 10e, der den Verbindungsbogen 1000 durchdringt und im Durchdringungsbereich fest, vorzugsweise stoffschlüssig, in der Regel durch Schweißung, mit diesem verbunden ist.

Werden die Enden benachbarter Rohrbündel 100.i, 100.i+1 mittels der vorgeschlagenen Verbindungsarmatur 1100, 1200 miteinander verbunden, dann vereinfacht sich deren Herstellung in Verbindung mit dem Verdrängerkörper 10, 11 nach einem weiteren Vorschlag erheblich, wenn letzterer und der jeweils zugeordnete Kammerboden 1100b als einstückiges, rotationssymmetrisches Teil ausgebildet sind. Dieses einstückige Teil wird vorzugsweise durch Zerspanung hergestellt (z.B. Drehteil).

### BEZUGSZEICHENLISTE DER VERWENDETEN ABKÜRZUNGEN

### Figur 1 (Stand der Technik)

- 100: Rohrbündel-Wärmeaustauscher
- 100.1, 100.2, ..., 100.i, ... ..., 100.n: Rohrbündel
- 100.i: i-tes Rohrbündel
- 100.i+1: dem Rohrbündel 100.i nachgeschaltetes Rohrbündel
- 100.i-1: dem Rohrbündel 100.i vorgeschaltetes Rohrbündel

- 200: Außenmantel
- 200*: Außenkanal
- 200a: festlagerseitiger Außenmantelflansch
- 200b: loslagerseitiger Außenmantelflansch

- 300: Innenrohr
- 300*: Innenkanal

- 400.1: erstes Gehäuse
- 400a: erster Anschlussstutzen
- 400a*: erster Querkanal
- 400.2: zweites Gehäuse
- 400b: zweiter Anschlussstutzen
- 400b*: zweiter Querkanal

- 500: (festlagerseitiger) Austauscherflansch
- 500a: erste Anschlussöffnung
- 500b: erster konischer Übergang
- 500c: erster erweiterter Durchtrittsquerschnitt

- 600: loslagerseitiger Austauscherflansch
- 700: festlagerseitige Rohrträgerplatte (Rohrspiegelplatte)

- 800: loslagerseitige Rohrträgerplatte (Rohrspiegelplatte)
- 800a: zweite Anschlussöffnung
- 800b: zweiter konischer Übergang
- 800c: zweiter erweiterter Durchtrittsquerschnitt
- 800d: (loslagerseitiger) Anschlussstutzen

- 900: Flachdichtung
- 910: O-Ring

- 1000: Verbindungsbogen

- c: Strömungsgeschwindigkeit im Außenmantel
- v: mittlere Strömungsgeschwindigkeit im Innenrohr

- A: Austritt (Abströmseite der Rohrträgerplatte 700, 800)
- Aᵢ: Durchtrittsquerschnitt des Innenrohres
- nAⱼ: Gesamtdurchtrittsquerschnitt aller parallel durchströmten Innenrohre
- Aₒ: Nenndurchtrittsquerschnitt des Verbindungsbogens
- Dᵢ: Rohrinnendurchmesser (Innenrohr 300)
- D₁: größter Durchmesser des ersten erweiterten Durchtrittsquerschnitts 500c im festlageseitigen Austauscherflansch 500
- DN: Nenndurchmesser des Verbindungsbogens (Aₒ = Dn²π/4)
- E: Eintritt (Anströmseite der Rohrträgerplatte 700, 800)
- Kᵢ: Innenkontur
- M: Wärmeträgermedium, allgemein
- P: Produkt (temperaturbehandelte Seite)

### Figuren 2 bis 5b

- 10: Verdrängerkörper
- 10a: schaftseitiger Abschnitt
- 10b: schaftferner Abschnitt
- 10c: Schaftteil
- 10d: Strömungsabrisskante
- 10e: Befestigungsteil
- 10f: endseitige Begrenzungsfläche
- 10g: zweite Strömungsabrisskante
- 10h: erste konkave Außenkontur
- 10i: zweite konkave Außenkontur

- 11: zweiter Verdrängerkörper
- 11a: zweiter schaftseitiger Abschnitt
- 11b: zweiter schaftferner Abschnitt
- 11c: zweiter Schaftteil
- 11d: Abrundung

- 1100: Verbindungsarmatur
- 1100a: Kammergehäuse (z.B. kreisförmiges erstes Rohr)
- 1100b: Kammerboden
- 1100c: Kammeranschluss (z.B. Aushalsung)
- 1100d: Verbindungsgehäuse (z.B. kreisförmiges zweites Rohr)
- 1100e: Kammerflansch

- 1200: zweite Verbindungsarmatur

- a: Abstand des Verbindungskanals
- b: mittlerer Abstand der Rohrträgerplatten (Rohrbündel)
- d: Länge des Verbindungsgehäuses

- dₘₐₓ: Außendurchmesser des Verdrängerkörpers
- d₃: Schaftdurchmesser

- w: Strömungsgeschwindigkeit in der Verbindungsarmatur

- A_{S}: Ringspaltquerschnitt
- A_{SE}: erweiternder Ringspaltquerschnitt
- A_{Smin}: minimaler Ringspaltquerschnitt (engste Stelle des Ringspaltquerschnittes A_{S})

- B: Umlenkbogen

- P(A): austretender Produktstrom
- P(E): eintretender Produktstrom
- P(V): querströmender Produktstrom (Querstrom)

- S: Symmetrieachse

- T1: erste Wirbelkammer
- T2: zweite Wirbelkammer

- V: Verbindungskanal

## Patentansprüche

1. Rohrbündel-Wärmetauscher (100), insbesondere für die Nahrungsmittel- und Getränkeindustrie, mit einer Rohrträgerplatte (700,800), einem Austauscherflansch (500; 1100e) und einem Anschlussstutzen (800d), einem/einer sich an den Austauscherflansch (500; 1100e) oder den Anschlussstutzen (800d) anschließenden Verbindungsbogen (1000) oder Verbindungsarmatur (1100; 1200) und einer Vorrichtung zur Einflussnahme auf die Strömung im Bereich der Rohrträgerplatte (700, 800), mit einem von einem Außenmantel (200) umgebenen Außenkanal (200*) für ein Wärmeträgermedium (M), mit einer Anzahl von sich achsparallel zum Außenmantel (200) durch den Außenkanal (200*) erstreckenden, gemeinsam einen Innenkanal (300*) bildenden, endseitig jeweils in der Rohrträgerplatte (700, 800) abgestützten Innenrohren (300), mit einem für alle Innenrohre (300) gemeinsamen, in dem Astauscherflansch (500; 1100e) ausgebildeten Eintritt (E) 10 oder Austritt (A) und einem gemeinsamen, in dem Anschlussstutzen (800d) ausgebildeten Austritt (A) bzw. Eintritt (E) für ein Produkt (P), und mit wenigstens einem die Strömung im Bereich der Rohrträgerplatte (700, 800) beeinflussenden Verdrängerkörper (10; 11), der unverrückbar befestigt und der axialsymmetrisch und konzentrisch zur Rohrträgerplatte (700, 800) angeordnet ist, der aus zwei Abschnitten (10a, 10b) gebildet wird, die an ihrem Verbindungsquerschnitt einen größten gemeinsamen Außendurchmesser (dₘₐₓ) ausbilden mit dem der Verdrängerkörper (10; 11) der die Strömung zum oder aus dem Innenkanal (300*) axialsymmetrisch teilt, nach außen umlenkt und dabei in einem zwischen dem Verdrängerkörper (10; 11) und einer Innenkontur (Kᵢ) des Austauscherflansches (500; 11OOe) bzw. Anschlussstutzens (800d) düsenartig verengten Ringspaltquerschnitt (A_{S}) beschleunigt und wobei der Verdrängerkörper (10, 11) nachfolgend zusammen mit der Innenkontur (Kᵢ) einen sich erweiternden Ringspaltquerschnitt (A_{SE}) bildet,
**dadurch gekennzeichnet,**
**dass** der Verdrängerkörper (10; 11) mit einem sich in Richtung seiner Symmetrieachse (S) erstreckenden Schaftteil (10c; 11c) versehen ist, der an seinem dem Verdrängerkörper (10; 11) abgewandten Ende mit dem Verbindungsbogen (1000) oder der Verbindungsarmatur (1100; 1200) fest verbunden ist.

2. Rohrbündel-Wärmetauscher (100) nach Anspruch 1,
**dadurch gekennzeichnet,**
**dass** der Verdrängerkörper (10) auf der Anströmseite der Rohrträgerplatte (700, 800) angeordnet ist.

3. Rohrbündel-Wärmetauscher (100) nach Anspruch 1,
**dadurch gekennzeichnet,**
**dass** der Verdrängerkörper (10) oder ein zweiter Verdrängerkörper (11) auf der Abströmseite der Rohrträgerplatte (700, 800) angeordnet ist.

4. Rohrbündel-Wärmetauscher (100) nach Anspruch 1,
**dadurch gekennzeichnet,**
**dass** der Verdrängerkörper (10) auf der Anströmseite und ein zweiter Verdrängerkörper (11) auf der Abströmseite der Rohrträgerplatte (700, 800) angeordnet sind.

5. Rohrbündel-Wärmetauscher (100) nach Anspruch 4,
**dadurch gekennzeichnet,**
**dass** die Verdrängerkörper (10; 10, 11) in einem/einer einzigen, jeweils zwei benachbarte, im Wesentlichen parallel angeordnete, in Reihe geschaltete Rohrbündel (100.i, 100.i+1) des Rohrbündel-Wärmeaustauschers (100) miteinander verbindenden Verbindungsbogen (1000) oder Verbindungsarmatur (1100) angeordnet sind.

6. Rohrbündel-Wärmetauscher (100) nach einem der Ansprüche 1 bis 5,
**dadurch gekennzeichnet,**
**dass** die Innenkontur (Kᵢ) von einem ersten bzw. zweiten erweiterten Durchtrittsquerschnitt (500c, 800c) innerhalb des Austauscherflansches (500) bzw. des Anschlussstutzens (800d) gebildet ist.

7. Rohrbündel-Wärmetauscher (100) nach einem der Ansprüche 1 bis 6,
**dadurch gekennzeichnet,**
**dass** der Verdrängerkörper (10) eine umlaufende Strömungsabrisskante (10d) besitzt.

8. Rohrbündel-Wärmetauscher (100) nach Anspruch 7,
**dadurch gekennzeichnet,**
**dass** die Strömungsabrisskante (10d) im erweiterten Durchtrittsquerschnitt (500c, 800c) positioniert ist.

9. Rohrbündel-Wärmetauscher (100) nach Anspruch 7 oder 8,
**dadurch gekennzeichnet,**
**dass** die Strömungsabrisskante (10d) an einer engsten Stelle (minimaler Rinspaltquerschnitt A_{Smin}) des Ringspaltquerschnittes (A_{S}) positioniert ist.

10. Rohrbündel-Wärmetauscher (100) nach Anspruch 7 oder 8,
**dadurch gekennzeichnet,**
**dass** die Strömungsabrisskante (10d), in Strömungsrichtung gesehen, hinter einer engsten Stelle (minimaler Rinspaltquerschnitt A_{Smin}) des Ringspaltquerschnittes (A_{S}) positioniert ist.

11. Rohrbündel-Wärmetauscher (100) nach einem der Ansprüche 1 bis 10,
**dadurch gekennzeichnet,**
**dass** der Außendurchmesser (dₘₐₓ) des Verdrängerkörpers (10) derart bemessen ist, dass ein durch einen jeweiligen Rohrinnendurchmesser (Dᵢ) gebildeter Durchtrittsquerschnitt der am äußeren Rand der Rohrträgerplatte (700, 800) gelegenen Innenrohre (300) jeweils etwa zur Hälfte durch eine in Richtung der Rohrträgerplatte (700, 800) projizierte Anströmfläche des Verdrängerkörpers (10) abgedeckt ist.

12. Rohrbündel-Wärmetauscher (100) nach einem der Ansprüche 7 bis 11,
**dadurch gekennzeichnet,**
**dass** die Abschnitte (10a, 10b) axialsymmetrisch ausgeführt sind und am Verbindungsquerschnitt miteinander die Strömungsabrisskante (10d) ausbilden.

13. Rohrbündel-Wärmetauscher (100) nach einem der Ansprüche 1 bis 12,
**dadurch gekennzeichnet,**
**dass** die Abschnitte (10a, 10b) jeweils durch eine konkave Außenkontur (10h, 10i) berandet sind.

14. Rohrbündel-Wärmetauscher (100) nach einem der Ansprüche 1 bis 13,
**dadurch gekennzeichnet,**
**dass** der Schaftteil (10c) stetig in den benachbarten Abschnitt (10a) übergeht.

15. Rohrbündel-Wärmetauscher (100) nach einem der Ansprüche 1 bis 14,
**dadurch gekennzeichnet,**
**dass** eine endseitige Begrenzungsfläche (10f) des schaftfernen Abschnitts (10b) eine zweite umlaufende Strömungsabrisskante (10g) ausbildet.

16. Rohrbündel-Wärmetauscher (100) nach einem der Ansprüche 1 bis 15, mit der Verbindungsarmatur (1100), die die produktdurchströmten Innenrohre (300) jeweils zweier benachbarter, im Wesentlichen parallel angeordneter, in Reihe geschalteter Rohrbündel (100.i, 100i+1) im Bereich der jeweiligen Rohrträgerplatte (700, 800) miteinander verbindet,
**dadurch gekennzeichnet,**
• **dass** jeder Rohrträgerplatte (700, 800) eine erste oder zweite Wirbelkammer (T1; T2) zugeordnet ist, und
• **dass** die erste und die zweite Wirbelkammer (T1, T2) mit einem im Wesentlichen sich linear erstreckenden Verbindungskanal (V) strömungsdurchlässig miteinander verbunden sind,
• der senkrecht zur Längsrichtung der Rohrbündel (100.i, 100.i+1) orientiert ist.

17. Rohrbündel-Wärmetauscher (100) nach Anspruch 16,
**dadurch gekennzeichnet,**
• **dass** die erste und die zweite Wirbelkammer (T1, T2) jeweils topfförmig mit einem mantelförmigen Kammergehäuse (1100a) und einem im wesentlichen ebenen Kammerboden (1100b) ausgeführt ist,
• **dass** an dem dem Kammerboden (1100b) abgewandten offenen Ende ein zur Rohrträgerplatte (700) hin abdichtbarer Kammerflansch (1100e) angeordnet ist,
• **dass** im mantelförmigen Kammergehäuse (1100a) ein Kammeranschluss (1100c) vorgesehen ist, und
• **dass** der jeweilige Kammeranschluss (1100c) mit einem Verbindungsgehäuse (1100d) verbunden ist.

18. Rohrbündel-Wärmetauscher (100) nach Anspruch 17,
**dadurch gekennzeichnet,**
**dass** der jeweilige Kammeranschluss (1100c) relativ kurz ausgeführt ist.

19. Rohrbündel-Wärmetauscher (100) nach Anspruch 17 oder 18,
**dadurch gekennzeichnet,**
**dass** der Kammeranschluss (1100c) wenigstens innenseitig gerundet ausgeführt ist.

20. Rohrbündel-Wärmetauscher (100) nach einem der Ansprüche 17 bis 19,
**dadurch gekennzeichnet,**
**dass** für das Kammergehäuse (1100a) und das Verbindungsgehäuse (1100d) jeweils ein kreisförmiges Rohr Verwendung findet und dass der Kammeranschluss (1100c) als Aushalsung ausgeführt ist.

21. Rohrbündel-Wärmetauscher (100) nach einem der Ansprüche 1 bis 15, mit der Verbindungsarmatur (1200), die die produktdurchströmten Innenrohre (300) jeweils zweier benachbarter, im Wesentlichen parallel angeordneter, in Reihe geschalteter Rohrbündel (100.i, 100i+1) im Bereich der jeweiligen Rohrträgerplatte (700, 800) miteinander verbindet,
**dadurch gekennzeichnet,**
• **dass** der angeströmten Rohrträgerplatte (700, 800) eine erste Wirbelkammer (T1) zugeordnet ist,
• die über einen sich zunächst im Wesentlichen linear und senkrecht zur Längsrichtung der Rohrbündel (100.i, 100.i+1) erstreckenden Verbindungskanal (V) und anschließend über einen 90 Grad Umlenkbogen (B) strömungsdurchlässig mit dem Austauscherflansch (500) oder dem Anschlussstutzen (800d) verbunden ist.

22. Rohrbündel-Wärmetauscher (100) nach Anspruch 21,
**dadurch gekennzeichnet,**
• **dass** die erste Wirbelkammer (T1) topfförmig mit einem mantelförmigen Kammergehäuse (1100a) und einem im wesentlichen ebenen Kammerboden (1100b) ausgeführt ist,
• **dass** an dem dem Kammerboden (1100b) abgewandten offenen Ende ein zur Rohrträgerplatte (700) hin abdichtbarer Kammerflansch (1100e) angeordnet ist,
• **dass** im mantelförmigen Kammergehäuse (1100a) ein Kammeranschluss (1100c) vorgesehen ist, und
• **dass** der Kammeranschluss (1100c) mit einem Verbindungsgehäuse (1100d) verbunden ist.

23. Rohrbündel-Wärmetauscher (100) nach Anspruch 22,
**dadurch gekennzeichnet,**
**dass** der Kammeranschluss (1100c) relativ kurz ausgeführt ist.

24. Rohrbündel-Wärmetauscher (100) nach Anspruch 22 oder 23,
**dadurch gekennzeichnet,**
**dass** der Kammeranschluss (1100c) wenigstens innenseitig gerundet ausgeführt ist.

25. Rohrbündel-Wärmetauscher (100) nach einem der Ansprüche 22 bis 24,
**dadurch gekennzeichnet,**
**dass** für das Kammergehäuse (1100a) und das Verbindungsgehäuse (1100d) jeweils ein kreisförmiges Rohr Verwendung findet und dass der Kammeranschluss (1100c) als Aushalsung ausgeführt ist.

26. Rohrbündel-Wärmetauscher (100) nach einem der Ansprüche 17 bis 20 oder 22 bis 25,
**dadurch gekennzeichnet,**
**dass** der Verdrängerkörper (10; 11) und der jeweils zugeordnete Kammerboden (1100b) als einstückiges, rotationssymmetrisches Teil ausgebildet sind.

## Claims

1. Tube bundle heat exchanger (100), in particular for the food and beverage industry, with a tube support plate (700, 800), an exchanger flange (500; 1100e) and a connecting piece (800d), a connection bend (1000) or a connection fitting (1100; 1200) adjacent to the exchanger flange (500; 1100e) or the connecting piece (800d) and a device for influencing the flow in the region of the tube support plate (700, 800) with an outer channel (200*) for a heat carrier medium (M), surrounded by an outer shell (200), with a number of inner tubes (300) which extend axis parallel to the outer shell (200) through the outer channel (200*), together forming an inner channel (300*) and being supported in the tube support plate (700, 800) at their respective end sides, with an inlet (E) or outlet (A) common to all the inner tubes (300), formed in the exchanger flange (500; 1100e) and with a common outlet (A) or inlet (E) for a product (P) formed in the connecting piece (800d), and with at least one displacement body (10, 11) influencing the flow in the region of the tube support plate (700, 800), which is fixedly fastened and which is arranged axisymmetric and concentric to the tube support plate (700, 800), which is formed by two portions (10a, 10b) which form a greatest common exterior diameter (dₘₐₓ) at their connecting cross section, with which the displacement body (10, 11) axisymmetrically divides the flow to or from the inner channel (300*), deflects it towards the outside and by doing so accelerates it in an annular gap cross section (As) which is nozzle-like constructed between the displacement body (10, 11) and an inner contour (Kᵢ) of the exchanger flange (500; 1100e) and the connecting piece (800d), respectively, and wherein the displacement body (10, 11) subsequently forms an enlarging annular gap cross section (A_{SE}) together with the inner contour (Kᵢ),
**characterised in that**
the displacement body (10, 11) is provided with a shank part (10c; 11c) extending in the direction of its axis of symmetry (S), which at its end distal to the displacement body (10, 11) is fixedly connected to the connection bend (1000) or the connection fitting (1100; 1200).

2. Tube bundle heat exchanger (100) according to claim 1,
**characterised in that**
the displacement body (10) is arranged at the approach side of the tube support plate (700, 800).

3. Tube bundle heat exchanger (100) according to claim 1,
**characterised in that**
the displacement body (10) or a second displacement body (11) is arranged at the downstream side of the tube support plate (700, 800).

4. Tube bundle heat exchanger (100) according to claim 1,
**characterised in that**
the displacement body (10) is arranged at the approach side and a second displacement body (11) is arranged at the downstream side of the tube support plate (700, 800).

5. Tube bundle heat exchanger (100) according to claim 4,
**characterised in that**
the displacement bodies (10; 10, 11) are arranged in one single connection bend (1000) or connection fitting (1100) which connects two neighboring, substantially parallel arranged and series-connected tube bundles (100.i, 100.i+1) of the tube bundle heat exchanger (100) with each other at a time.

6. Tube bundle heat exchanger (100) according to one of claims 1 to 5,
**characterised in that**
the inner contour (Ki) is formed by a first or a second, respectively, enlarged passage cross section (500c, 800c) within the exchanger flange (500) or the connecting piece (800d), respectively.

7. Tube bundle heat exchanger (100) according to one of claims 1 to 6,
**characterised in that**
the displacement body (10) has a circumferential flow separation edge (10d).

8. Tube bundle heat exchanger (100) according to claim 7,
**characterised in that**
the flow separation edge (10d) is positioned in the enlarged passage cross section (500c, 800c).

9. Tube bundle heat exchanger (100) according to claim 7 or 8,
**characterised in that**
the flow separation edge (10d) is positioned at a narrowest site (minimal ring gap cross section Admin) of the ring gap cross section (As).

10. Tube bundle heat exchanger (100) according to claim 7 or 8,
**characterised in that**
when seen in the flow direction, the flow separation edge (10d) is positioned behind a narrowest site (minimal ring gap cross section Admin) of the ring gap cross section (As).

11. Tube bundle heat exchanger (100) according to one of claims 1 to 10,
**characterised in that**
the outside diameter (dₘₐₓ) of the displacement body (10) is dimensioned such that a passage cross section of the inner tubes (300), which are situated on the outer edge of the tube support plate (700, 800), and which is formed by a respective tube inside diameter (Dᵢ), is covered each about half by a plane of flow, projected in the direction of the tube support plate (700, 800), of the displacement body (10).

12. Tube bundle heat exchanger (100) according to one of claims 7 to 11,
**characterised in that**
the portions (10a, 10b) are realized to be axisymmetric and that together, they form the flow separation edge (10d) at the connection cross section.

13. Tube bundle heat exchanger (100) according to one of claims 1 to 12,
**characterised in that**
the portions (10a, 10b) have each one the edge by a concave outer contour (10h, 10i).

14. Tube bundle heat exchanger (100) according to any one of claims 1 to 13,
**characterised in that**
the shank part (10c) passes into the neighboring portion (10a) in a continuous way.

15. Tube bundle heat exchanger (100) according to one of claims 1 to 14,
**characterised in that**
a periphery (10f) at the end side of the portion (10b) distal to the shank forms a second circumferential flow separation edge (10g).

16. Tube bundle heat exchanger (100) according to one of claims 1 to 15, with the connection fitting (1100), which connects the inner tubes (300) through which product is flowing, of two neighboring, substantially parallel arranged and series-connected tube bundles (100.i, 100.i+1) with each other at a time in the region of the respective tube support plate (700, 800),
**characterised in that**
• a first or second swirl chamber (T1; T2) is assigned to each tube support plate (700, 800), and
• that the first and the second swirl chamber (T1; T2) are connected with each other by an essentially linearly extending connection channel (V) in a fashion which allows flow to pass through,
• which is oriented vertical to the longitudinal direction of the tube bundles (100.i, 100.i+1).

17. Tube bundle heat exchanger (100) according to claim 16,
**characterised in that**
• the first or second swirl chamber (T1; T2) are each one realized to be pot-shaped, with a shell-shaped chamber casing (1100a) an a substantially planar chamber bottom (1100b),
• that at the open end distal to the chamber bottom (1100b) is arranged a chamber flange (1100e), sealable towards the tube support plate (700),
• that a chamber connecting piece (1100c) is provided in the shell-shaped chamber casing (1100a), and
• that the respective chamber connecting piece (1100c) is connected to a connection casing (1100d).

18. Tube bundle heat exchanger (100) according to claim 17,
**characterised in that**
the respective chamber connecting piece (1100c) is realized as to be relatively short.

19. Tube bundle heat exchanger (100) according to claim 17 or 18,
**characterised in that**
the chamber connecting piece is executed to be rounded, at least at the inner side.

20. Tube bundle heat exchanger (100) according to one of claims 17 to 19,
**characterised in that**
for the chamber casing (1100a) and the connection casing (1100d), respectively, a circular tube is used and that the chamber connecting piece (1100c) is realized as a collar.

21. Tube bundle heat exchanger (100) according to any one of claims 1 to 15, with the connection fitting (1200), which connects the inner tubes (300) through which product is flowing, of two neighboring, substantially parallel arranged and series-connected tube bundles (100.i, 100.i+1) with each other at a time in the region of the respective tube support plate (700, 800),
**characterised in that**
• a first swirl chamber (T1) is assigned to the approached tube support plate (700, 800)
• which is connected to the exchanger flange (500) or the connecting piece (800d) via a connection channel (V), first extending essentially linear and vertical to the longitudinal direction of the tube bundles (100.i, 100.i+1) and subsequently via a 90 degree deflection bend (B), in a fashion which allows flow to pass through.

22. Tube bundle heat exchanger (100) according to claim 21,
**characterised in that**
• the first swirl chamber (T1) is realized as to be pot-shaped, with a shell-shaped chamber casing (1100a) an a substantially planar chamber bottom ( 1100b),
• that at the open end distal to the chamber bottom (1100b) is arranged a chamber flange (1100e), sealable towards the tube support plate (700).
• that a chamber connecting piece (1100c) is provided in the shell-shaped chamber casing (1100a), and
• that the chamber connecting piece (1100c) is connected to a connection casing (1100d).

23. Tube bundle heat exchanger (100) according to claim 22,
**characterised in that**
the chamber connecting piece (1100c) is realized to be relatively short.

24. Tube bundle heat exchanger (100) according to claim 22 or 23,
**characterised in that**
the chamber connecting piece (1100c) is realized to be rounded, at least at the inner side.

25. Tube bundle heat exchanger (100) according to any one of claims 22 to 24,
**characterised in that**
for the chamber casing (1100a) and the connection casing (1100d), respectively, a circular tube is used and that the chamber connecting piece (1100c) is realized as a collar.

26. Tube bundle heat exchanger (100) according to one of claims 17 to 20 or 22 to 25,
**characterised in that**
the displacement body (10; 11) and the respective associated chamber bottom (1100b) are made in one single, rotationally symmetric piece.

## Revendications

1. Echangeur de chaleur à faisceau de tubes (100), en particulier pour l'industrie des aliments et des boissons, avec une plaque porte-tubes (700, 800), une bride d'échangeur (500; 1100e) et une tubulure de raccordement (800d), un coude de raccordement (1000) ou une armature de raccordement (1100 ; 1200) se raccordant à la bride d'échangeur (500 ; 1100e) ou à la tubulure de raccordement (800d) et un dispositif destiné à agir sur l'écoulement dans la zone de la plaque porte-tubes (700, 800), avec un canal extérieur (200*), entouré d'une enveloppe extérieure (200), pour un fluide caloporteur (M), avec un certain nombre de tubes intérieurs (300) s'étendant en parallélisme axial avec l'enveloppe extérieure (200) à travers le canal extérieur (200*), formant conjointement un canal intérieur (300*), appuyés côté extrémité respectivement dans la plaque porte-tubes (700, 800), avec une entrée (E) ou sortie (A) pour un produit, commune pour tous les tubes intérieurs (300), constituée dans la bride d'échangeur (500; 1100e), et avec au moins un corps de refoulement (10; 11), agissant sur l'écoulement dans la zone de la plaque porte-tubes (700, 800), qui est fixé de façon inamovible et qui est disposé de façon axialement symétrique et concentrique par rapport à la plaque porte-tubes (700, 800), et qui est formé de deux tronçons (10a, 10b) qui constituent, au niveau de leur section transversale de raccordement, un diamètre extérieur (dₘₐₓ) commun le plus grand avec lequel le corps de refoulement (10 ; 11) divise de façon axialement symétrique l'écoulement en direction ou à partir du canal intérieur (300*), le détourne vers l'extérieur et l'accélère en l'occurrence dans une section transversale d'interstice annulaire (A_{S}) rétrécie à la façon d'une buse entre le corps de refoulement (10 ; 11) et un contour intérieur (Kᵢ) de la bride d'échangeur (500 ; 1100e) ou respectivement de la tubulure de raccordement (800d), et forme ensuite conjointement avec le contour intérieur (Kᵢ) une section transversale d'interstice annulaire (A_{SE}) qui s'élargit,
**caractérisé en ce que**
le corps de refoulement (10 ; 11) est muni d'une partie de tige (10c ; 11c), s'étendant en direction de son axe de symétrie (S), qui, à son extrémité éloignée du corps de refoulement (10 ; 11), est raccordée de façon fixe au coude de raccordement (1000) ou à l'armature de raccordement (1100 ; 1200).

2. Echangeur de chaleur à faisceau de tubes (100) selon la revendication 1,
**caractérisé en ce que**
le corps de refoulement (10) est disposé sur le côté d'arrivée d'écoulement de la plaque porte-tubes (700, 800).

3. Echangeur de chaleur à faisceau de tubes (100) selon la revendication 1,
**caractérisé en ce que**
le corps de refoulement (10) ou un deuxième corps de refoulement (11) est disposé sur le côté sortie d'écoulement de la plaque porte-tubes (700, 800).

4. Echangeur de chaleur à faisceau de tubes (100) selon la revendication 1,
**caractérisé en ce que**
le corps de refoulement (10) est disposé sur le côté d'arrivée d'écoulement, et un deuxième corps de refoulement (11) est disposé sur le côté sortie d'écoulement de la plaque porte-tubes (700, 800).

5. Echangeur de chaleur à faisceau de tubes (100) selon la revendication 4,
**caractérisé en ce que**
les corps de refoulement (10; 10, 11) sont disposés dans un coude de raccordement (1000) ou une armature de raccordement (1100) unique raccordant entre eux respectivement deux faisceaux de tubes (100.i, 100.i+1) voisins de l'échangeur de chaleur à faisceau de tubes (100), disposés essentiellement de façon parallèle, montés en série.

6. Echangeur de chaleur à faisceau de tubes (100) selon l'une des revendications 1 à 5,
**caractérisé en ce que**
le contour intérieur (Kᵢ) est formé d'une première ou respectivement deuxième section transversale de passage (500c, 800c) élargie à l'intérieur de la bride d'échangeur (500) ou respectivement de la tubulure de raccordement (800d).

7. Echangeur de chaleur à faisceau de tubes (100) selon l'une des revendications 1 à 6,
**caractérisé en ce que**
le corps de refoulement (10) possède une arête de décollement d'écoulement (10d) périphérique.

8. Echangeur de chaleur à faisceau de tubes (100) selon la revendication 7,
**caractérisé en ce que**
l'arête de décollement d'écoulement (10d) est positionnée dans la section transversale de passage (500c, 800c).

9. Echangeur de chaleur à faisceau de tubes (100) selon la revendication 7 ou 8,
**caractérisé en ce que**
l'arête de décollement d'écoulement (10d) est positionnée dans un emplacement le plus étroit (section transversale d'interstice annulaire minimale A_{Smin}) de la section transversale d'interstice annulaire (A_{S}).

10. Echangeur de chaleur à faisceau de tubes (100) selon la revendication 7 ou 8,
**caractérisé en ce que**
l'arête de décollement d'écoulement (10d), vue dans la direction d'écoulement, est positionnée derrière un emplacement le plus étroit (section transversale d'interstice annulaire minimale A_{Smin}) de la section transversale d'interstice annulaire (A_{S}).

11. Echangeur de chaleur à faisceau de tubes (100) selon l'une des revendications 1 à 10,
**caractérisé en ce que**
le diamètre extérieur (dₘₐₓ) du corps de refoulement (10) est dimensionné de telle sorte qu'une section transversale de passage, formée d'un diamètre intérieur de tube (Dᵢ) respectif, des tubes intérieurs (300) posés sur le bord extérieur de la plaque porte-tubes (700, 800) est recouverte respectivement à peu près jusqu'à la moitié par une surface d'arrivée d'écoulement du corps de refoulement (10) projetée en direction de la plaque porte-tubes (700, 800).

12. Echangeur de chaleur à faisceau de tubes (100) selon l'une des revendications 7 à 11,
**caractérisé en ce que**
les tronçons (10a, 10b) sont réalisés de façon axialement symétrique et constituent conjointement l'arête de décollement d'écoulement (10d) sur la section transversale de raccordement.

13. Echangeur de chaleur à faisceau de tubes (100) selon l'une des revendications 1 à 12,
**caractérisé en ce que**
les tronçons (10a, 10b) sont respectivement entourés d'un contour extérieur (10h, 10i) concave.

14. Echangeur de chaleur à faisceau de tubes (100) selon l'une des revendications 1 à 13,
**caractérisé en ce que**
la partie de tige (10c) se transforme de façon continue en tronçon (10a) voisin.

15. Echangeur de chaleur à faisceau de tubes (100) selon l'une des revendications 1 à 14,
**caractérisé en ce**
**qu'**une surface de limitation (10f), côté extrémité, du tronçon (10b) éloigné de la tige constitue une deuxième arête de décollement d'écoulement (10g) périphérique.

16. Echangeur de chaleur à faisceau de tubes (100) selon l'une des revendications 1 à 15, avec l'armature de raccordement (1100) qui raccorde les uns aux autres les tubes intérieurs (300), parcourus par le produit, de respectivement deux faisceaux de tubes (100.i, 100.i+1) voisins montés en série, disposés essentiellement de façon parallèle, dans la zone de la plaque porte-tubes (700, 800) respective,
**caractérisé en ce que**
• une première ou deuxième chambre de turbulence (T1 ; T2) est affectée à chaque plaque porte-tubes (700, 800), et
• la première et la deuxième chambre de turbulence (T1, T2) sont raccordées l'une à l'autre, de façon perméable à l'écoulement, avec un canal de raccordement (V) s'étendant essentiellement de façon linéaire,
• qui est orienté perpendiculairement à la direction longitudinale des faisceaux de tubes (100.i, 100.i+1).

17. Echangeur de chaleur à faisceau de tubes (100) selon la revendication 16,
**caractérisé en ce que**
• la première et la deuxième chambre de turbulence (T1, T2) sont réalisées respectivement en forme de pot avec un carter de chambre (1100a) en forme d'enveloppe et un fond de chambre (1100b) essentiellement plan,
• **en ce que**, à l'extrémité ouverte éloignée du fond de chambre (1100b), il est disposé une bride de chambre (1100e) pouvant être rendue étanche en direction de la plaque porte-tubes (700, 800),
• **en ce qu'**un raccord de chambre (1100c) est prévu dans le carter de chambre (1100a) en forme d'enveloppe, et
• **en ce que** le raccord de chambre (1100c) respectif est raccordé à un carter de raccordement (1100d).

18. Echangeur de chaleur à faisceau de tubes (100) selon la revendication 17,
**caractérisé en ce que**
le raccord de chambre (1100c) respectif est réalisé de façon relativement courte.

19. Echangeur de chaleur à faisceau de tubes (100) selon la revendication 17 ou 18,
**caractérisé en ce que**
le raccord de chambre (1100c) est réalisé de façon arrondie au moins côté intérieur.

20. Echangeur de chaleur à faisceau de tubes (100) selon l'une des revendications 17 à 19,
**caractérisé en ce que**
respectivement un tube de forme circulaire est utilisé pour le carter de chambre (1100a) et le carter de raccordement (1100d), et **en ce que** le raccord de chambre (1100c) est réalisé en tant que collet.

21. Echangeur de chaleur à faisceau de tubes (100) selon l'une des revendications 1 à 15, avec l'armature de raccordement (1200) qui raccorde les uns aux autres les tubes intérieurs (300), parcourus par le produit, de respectivement deux faisceaux de tubes (100.i, 100.i+1) voisins montés en série, disposés essentiellement de façon parallèle, dans la zone de la plaque porte-tubes (700, 800) respective,
**caractérisé en ce que**
• une première chambre de turbulence (T1) est affectée à la plaque porte-tubes (700, 800) parcourue par l'arrivée d'écoulement,
• par le biais d'un canal de raccordement (V) qui s'étend d'abord essentiellement de façon linéaire et perpendiculairement à la direction longitudinale des faisceaux de tubes (100.i, 100.i+1) et ensuite par le biais d'un coude de détournement (B) de 90 degrés, la première chambre de turbulence (T1) est raccordée, de façon étanche à l'écoulement, à la bride d'échangeur (500) ou à la tubulure de raccordement (800d).

22. Echangeur de chaleur à faisceau de tubes (100) selon la revendication 21,
**caractérisé en ce que**
• la première chambre de turbulence (T1) est réalisée en forme de pot avec un carter de chambre (1100a) en forme d'enveloppe et un fond de chambre (1100b) essentiellement plan,
• **en ce que**, à l'extrémité ouverte éloignée du fond de chambre (1100b), il est disposé une bride de chambre (1100e) pouvant être rendue étanche en direction de la plaque porte-tubes (700),
• **en ce qu'**un raccord de chambre (1100c) est prévu dans le carter de chambre (1100a) en forme d'enveloppe, et
• **en ce que** le raccord de chambre (1100c) respectif est raccordé à un carter de raccordement (1100d).

23. Echangeur de chaleur à faisceau de tubes (100) selon la revendication 22,
**caractérisé en ce que**
le raccord de chambre (1100c) est réalisé de façon relativement courte.

24. Echangeur de chaleur à faisceau de tubes (100) selon la revendication 22 ou 23,
**caractérisé en ce que**
le raccord de chambre (1100c) est réalisé de façon arrondie au moins côté intérieur.

25. Echangeur de chaleur à faisceau de tubes (100) selon l'une des revendications 22 à 24,
**caractérisé en ce que**
respectivement un tube de forme circulaire est utilisé pour le carter de chambre (1100a) et le carter de raccordement (1100d), et **en ce que** le raccord de chambre (1100c) est réalisé en tant que collet.

26. Echangeur de chaleur à faisceau de tubes (100) selon l'une des revendications 17 à 20 ou 22 à 25,
**caractérisé en ce que**
le corps de refoulement (10 ; 11) et le fond de chambre (1100b) qui est respectivement affecté sont constitués en tant que partie d'une seule pièce symétrique en rotation.
